# EUROPEAN PATENT SPECIFICATION

(11) **EP 1 837 797 B1**
(45) Date of publication and mention of the grant of the patent: **17.08.2011**
(21) Application number: 07013773.2
(22) Date of filing: 28.02.2001
(51) Int. Cl.: G06K 7/00, G06K 19/07

(54) **Radio frequency identification transponder**
RFID-Transponder
Transpondeur d'identification par radiofréquence

(30) Priority: 28.02.2000 AU PQ589400
(43) Date of publication of application: 26.09.2007
(62) Divisional of application: 05075638.6
(73) Proprietor: MAGELLAN TECHNOLOGY PTY. LIMITED, Annadale NSW 2308 (AU)
(72) Inventor: Littlechild, Stuart Colin, Stanmore NSW 2048 (AU); Stanton, Michael John, Cherrybrook NSW 2126 (AU)
(74) Representative: Frost, Alex John

(56) References cited:
- EP-A- 0 590 590
- US-A- 5 638 433

## Description

### FIELD OF INVENTION

The present invention relates to a radio frequency identification("RFID") transponder, and more particularly to an RFID transponder that are used in orientation independent applications. That is, where a transponder must be operatable in random orientations.

The invention has been developed primarily for interrogating multiple passive transponders that are attached to objects to be identified by those respective transponders, and will be described hereinafter with reference to that application. A typical application is the identification of RFID transponders attached to conveyor fedluggage where the transponder data is used to control the automatic sorting of the luggage. However, the invention is not limited to this particular field of use. For example, various aspects of the invention are applicable to systems based on active transponders, and to applications other than luggage sorting systems.

### BACKGROUND

In prior art systems, transponders are read by interrogation fields within Tunnel Reader Programmers ("TRPs"). Typically, the orientation and position of transponders as they enter the TRP are random and unknown. Accordingly, the TRP must switch its interrogation fields between orthogonal directions so that the transponders can be interrogated independently of their orientation. Patent US 5,258,766 provides an example of such a system.

There are a number of specific issues arising from the practical use of RFID transponders, in, say, luggage handling situations. These issues include the facts that, for example:
1. A mechanical means, such as a conveyor, moves luggage (and thereby transponders) through the TRP.
2. Several transponders may be attached to a single item.

Where a mechanical means, such as a conveyor, moves items with attached transponders through the TRP the determination of the order of items on the conveyor is an essential requirement for allowing automated processing of the items. The determination of the order in which transponders enter a TRP is advantageous for determining the order of items on the conveyor. In prior art systems transponder order is normally inferred from the order in which they are identified. However, where multiple transponders are present the identification messages from these transponders may clash and the transponders may fail to be identified as they enter the TRP. When messages clash a further time interval will be required to correctly identify the transponders. During this time the transponders are moved further into the TRP by the conveyor. It is possible that subsequent transponder or transponders may enter the TRP before the first transponder is identified. It then becomes possible that one or more of the subsequent transponders may be identified before the first transponder. Consequently, the order of items may incorrectly be inferred from the order of transponder identification.

When the interrogation fields are switched, passive transponders power down within a relatively short time, at which point temporary data stored in volatile memory on board the transponder may be lost. Such data can include configuration information or temporary data stored in registers. In prior art systems configuration information or temporary settings required for transponder operation must be regenerated in the transponder after each switching of the interrogation field. This data can be read out of the transponder's memory or may have to be transmitted to the transponder by the TRP This is undesirable because of the time delay involved. Moreover, in some cases, the data may no longer be available.

EP-A-0590590 is acknowledged in the preamble of the independent claims.

The above discussion is not to be taken as an admission of the extent of the common general knowledge in the field of the invention.

### SUMMARY OF THE INVENTION

It is an object of the present invention to overcome, or at least substantially ameliorate, one or more of the disadvantages of the prior art or at least to provide a useful alternative.

According to a first aspect of the invention there is provided a radio-frequency identification ("RFID") transponder for use in an RFID system, the transponder including:
a dynamic memory array for storing first data; and
a power supply for powering circuitry associated with the RFID transponder, including the dynamic memory array;
wherein the transponder is configured such that, when power ceases to be provided to the dynamic memory array by the power supply, the first data in the dynamic memory array is validly maintained therein for a predetermined time period; and
wherein the memory is responsive to an interrogating signal from the system for
selectively updating the first data.

Preferably, the RFID system provides an interrogating signal having an identifier and the transponder includes a receiver for receiving the signal. More preferably, the transponder includes a signal processor that is responsive to:
a) The receiver for extracting the identifier from the signal; and
b) The identifier and the first data for determining whether the identifier is stored in the memory array.

In a preferred embodiment, the power supply is configured to provide power by converting an externally applied electromagnetic excitation field into electrical power.

Preferably also, the first predetermined time period is determined by discharging of the dynamic memory array through stray leakage paths within the dynamic memory array.

Preferably, the RFID transponder further includes timer means for providing a validity flag in response to an interrogating signal, the flag being "valid" if the interrogating signal is received within a second time period and "invalid" if the interrogating signal is received after the second time period, the transponder being configured such that the data in the dynamic memory array is maintained in a readable state until at least the expiration of the second time period.

In a preferred form, the timer means includes a capacitive cell for storing a charge generated by current from the power supply, the timer means being configured such that, once power from the power supply ceases to be supplied, the charge in the capacitive cell discharges at a predetermined rate.

Preferably, the status of the validity flag is based on a voltage generated at a predetermined point in the timer means, the voltage decaying as the capacitive cell discharges. More preferably, the voltage is the output voltage of the capacitive cell as it discharges through a load.

In a preferred embodiment, the capacitive cell is a memory cell. It is particularly preferable that the memory cell form part of the dynamic memory array.

According to a second aspect of the invention there is provided an RFID system including a transponder according to the first aspect and a transponder interrogator for providing an interrogation field and reading data from the transponder.

Preferably, the interrogator is configured to sequentially switch an orientation of the interrogation field, and the second time period is selected to exceed the time that the interrogation field is off during switching of its orientation.

According to a third aspect of the invention there is provided a method of using a radio-frequency identification ("RFID") transponder in an RFID system, according to claim 43. In one form, a method includes the steps of:
storing first data in a dynamic memory array included within the transponder; and
powering circuitry associated with the RFID transponder, including the dynamic memory array, with a power supply;
validly maintaining the data in the dynamic memory array for a predetermined time period after power ceases to be provided to the dynamic memory array by the power supply; and
being responsive to an interrogating signal from the system for selectively updating the first data.

Preferably, the method includes the additional step of the RFID system providing an interrogating signal having an identifier, and the transponder includes a receiver for receiving the signal. More preferably, the transponder includes a signal processor that is responsive to:
a) The receiver for extracting the identifier from the signal; and
b) The identifier and the first data for determining whether the identifier is stored in the memory array.

In another implementation, there is provided a radiofrequency, identification ("RFID") transponder for use with an RFID interrogator that provides a plurality of temporally spaced interrogating signals, wherein the signals include respective identifiers and the transponder includes:
a receiver for receiving the interrogating signals from the interrogator;
a memory array for storing first data; and
a signal processor being responsive to the receiver for extracting the identifier from the signal and being responsive to the identifier and the first data for determining whether some or all of the identifier is stored in the memory array.

If some or all of the identifier is stored in the memory array, it is preferred that the data stored updates some or all of the first data.

Preferably, the signal processor determines that the identifier is stored in the memory array if the identifier is different to the first data. In other embodiments the signal processor determines that the identifier is stored in the memory array if a predetermined portion of the identifier is different to the first data.

Preferably also, the identifier includes data that is selected from one or more of the following types:
second data indicative of the interrogator; and
third data that is not constant for the respective signals.

More preferably, the third data is indicative of the timing of the respective signal. However, in other embodiments, the third data is a pseudo random number or character string. More preferably, the second data includes a reference number for the interrogator that is the same for all the signals provided by the interrogator. Even more preferably, the third data includes a date stamp that varies with the passage of time. That is, while the reference number will remain constant, the date stamp changes with time to allow greater functionality, as will become apparent from the following detailed description.

Preferably, the signal processor determines that the third data is stored in the memory array if the third data is different from the first data. More preferably, the signal processor determines that the third data is stored in the memory array if the second data is different from the first data. That is, in the latter case, the memory array stores information-the third data-if it is the first time that the interrogator has interrogated the transponder. In some embodiments the second data is stored in the memory whenever the third data is stored in the memory array. In other embodiments additional information is derived from the interrogation signal and selectively stored in the memory array.

Preferably, the signal processor determines that the second data is stored in the memory array if the second data is different to the first data. That is, the memory array stores information-the second data-if it is the first time that the interrogator has interrogated the transponder.

It will be understood that by"interrogated"it is meant that the interrogation signal is received by the transponder.

In other embodiments the signal processor determines that the identifier is stored in the memory array if the third data is sufficiently different to some or all of the first data. More particularly, in embodiments where the third data includes a date stamp that is indicative of the time of the respective signal, it is preferred that that date stamp is compared with the first data to determine whether sufficient time has elapsed since the last store of the third data in the memory array. If the elapsed time is large, then the more recent third data is stored in the memory array.

In **a** preferred form, the transponder includes a transmitter for transmitting a reply signal to the interrogator in response to an interrogating signal, wherein the reply signal includes:
fourth data indicative of the transponder; and
fifth data derived from the first data.

Preferably also, the fifth data includes either or both of the second data or the third data. More preferably, the fifth data includes the third data. In some embodiments, all of the respective identifier is stored in the memory array to constitute the first data. A subset of these embodiments will include within the reply signal all the information contained in the first data. Other embodiments will include less than all of the information contained within the first data.

The fourth data is preferably a coded string for allowing discrimination between other transponders used with the interrogator.

In a further implementation, there is provided a method of using a radio-frequency identification ("RFID") transponder with an RFID interrogator that provides a plurality of temporally spaced interrogating signals, wherein the signals include respective identifiers and the method includes the steps of:
receiving the interrogating signals from the interrogator with a receiver;
storing first data in a memory array; and
being responsive to the receiver for extracting the identifier from the signal and being responsive to the identifier and the first data for determining whether some or all of the identifier is stored in the memory array.

In a yet further implementation, there is provided a radio-frequency identification ("RFID") interrogator for interrogating a plurality of RFID transponders, the interrogator including:
a transmitter for providing a plurality of temporally spaced interrogating signals, wherein the signals include respective identifiers;
a receiver for receiving response signals from the respective transponders, the response signals including respective identity data that is derived from one or more of the interrogator signals; and
a signal processor being responsive to the receiver for extracting the identity data from the response signals to determine the order in which the transponders were first in receipt of an interrogating signal.

Preferably, the interrogator is a TRP and the transponders are attached to respective articles that are being progressed through the TRP, wherein the signal processor is responsive to the determination of the order in which the transponders were first in receipt of an interrogating signal for determining the order in which the articles progress through the TRP. More preferably, the articles are aircraft luggage such as suit cases, baggage, boxes or the like.

In other implementations, there is provided a method of : interrogating a plurality of radio-frequency identification ("RFID") transponders with an RFID interrogator, the method including the steps of:
providing a plurality of temporally spaced interrogating signals to the transponders, wherein the signals include respective identifiers;
receiving response signals from the respective transponders with a receiver, the response signals including respective identity data that is derived from one or more of the interrogator signals; and
being responsive to the receiver for extracting the identity data from the response signals to determine the order in which the transponders were first in receipt of an interrogating signal.

In further implementations, there is provided a plurality of radio-frequency identification("RFID") transponders for use with an RFID interrogator that provides a plurality of temporally spaced interrogating signals that include respective identifiers, the transponder each including:
a receiver for receiving one or more of the interrogating signals; a signal processor being responsive to the receiver for extracting the identifiers from the one or more signals; and
a transmitter being responsive to the identifiers for transmitting a response signal for allowing the interrogator to determine the order in which the transponders were first in receipt of an interrogating signal.

Preferably, the identifier includes first data indicative of the time of the provision of the interrogating signal and the response signal includes data derived from the identifier and data unique to the respective transponder. More preferably, the identifier also includes second data unique to the interrogator and the response signal is derived from the first and the second data.

Preferably also, the transponders each include respective memory arrays for storing selected data. More preferably, each transponder includes a power supply for supplying power to the transponder, inclusive of the memory array. Even more preferably, each memory array validly maintains the selected data for a predetermined time period after power ceases to be provided to the power supply.

In a preferred form, the memory array is comprised of dynamic memory. More preferably, the memory array is comprised of DRAM. In other embodiments, however, use is madeof EEPROM, FRAM or RAM

In different implementations, there is provided a method of using a plurality of radio-frequency identification("RFID") transponders with an RFID interrogator that provides a plurality of temporally spaced interrogating signals that include respective identifiers, the method including the steps of:
the transponders receiving one or more of the interrogating signals with respective receivers;
being responsive to the respective receivers for extracting the identifiers from the one or more signals; and
transmitting respective response signals in response to the identifiers for allowing the interrogator to determine the order in which the transponders were first in receipt of an interrogating signal.

In implementations, there is provided a baggage handling system for baggage that is tagged with respective radio-frequency identification ("RFID") transponders, the system including:
an RFID interrogator that transmits a plurality of temporally spaced interrogating signals into an interrogating space, wherein the signals include respective identifier;
a conveyer for sequentially progressing the baggage through the interrogating space;
a receiver for receiving response signals from the transponders, wherein the response signals include identity data that is derived from one or more of the interrogator signals; and
a signal processor being responsive to the receiver for extracting the identity data from the response signals and thereby determining the order in which the baggage is progressed through the interrogating space.

In some embodiments the system includes a plurality of spaced apart interrogators and the identifiers include data indicative of the interrogator that transmitted the respective interrogating signal.

In implementations, there is provided a method of handling baggage that is tagged with respective radio-frequency identification ("RFID") transponders, the method including the steps of:
transmitting a plurality of temporally spaced interrogating signals into an interrogating space with an RFID interrogator, wherein the signals include respective identifiers;
sequentially progressing the baggage through the interrogating space;
receiving response signals from the transponders with a receiver, wherein the response signals include identity data that is derived from one or more of the interrogator signals; and
being responsive to the receiver for extracting the identity data from the response signals and thereby determining the order in which the baggage is progressed through the interrogating space.

Preferably, once a transponder has been"interrogated"and has responded to that interrogation, it is muted, in that it will not respond to subsequent interrogation signals. Preferably also, the mute is only in respect of interrogation signals from the same interrogator. That is, if the transponder receives an interrogation signal from another interrogator it will respond. In still further embodiments the first interrogated is configured to selectively"un-mute"the interrogated transponder by providing in identifier that indicates to the transponder that it is another interrogator.

### BRIEF DESCRIPTION OF THE DRAWINGS

Preferred embodiments of the invention will now be described, by way of example only, with reference to the accompanying drawings, in which:
Figure 1 shows a prior art TRP;
Figure 2 shows waveforms associated with the prior art TRP of Figure 1 ;
Figures 3 (a) and 3 (b) show exemplary circuit schematics associated with a transponder memory array according to the present invention;
Figures 4 (a) and 4 (b) show waveforms associated with the exemplary circuit schematics shown in Figures 3 (a) and 3 (b);
Figure 5 shows an example circuit for use with a transponder memory array according to the invention;
Figure 6 shows an example circuit for use with a transponder memory array according to the invention;
Figure 7 is a perspective view of a piece of luggage having attached to it a transponder according to the invention;
Figure 8 is a block diagram of relevant functional portions of the transponder according to the invention;
Figure 9 shows a diagram of a conveyor mounted interrogator according to the invention with closely spaced items with transponders attached to the items;
Figure 10 shows waveforms received by a transponder according to an embodiment of the invention;
Figure 11 shows an embodiment of the invention having a memory array using RAM;
Figure 12 shows a diagram of a baggage handling system according to the invention including two closely spaced conveyor mounted interrogators;
Figure 13 shows a block diagram of relevant functional portions of a transponder according to another embodiment of the invention; and
Figure 14 shows an example circuit of a memory power supply isolator for use with a transponder according to the invention.

### DETAILED DESCRIPTION

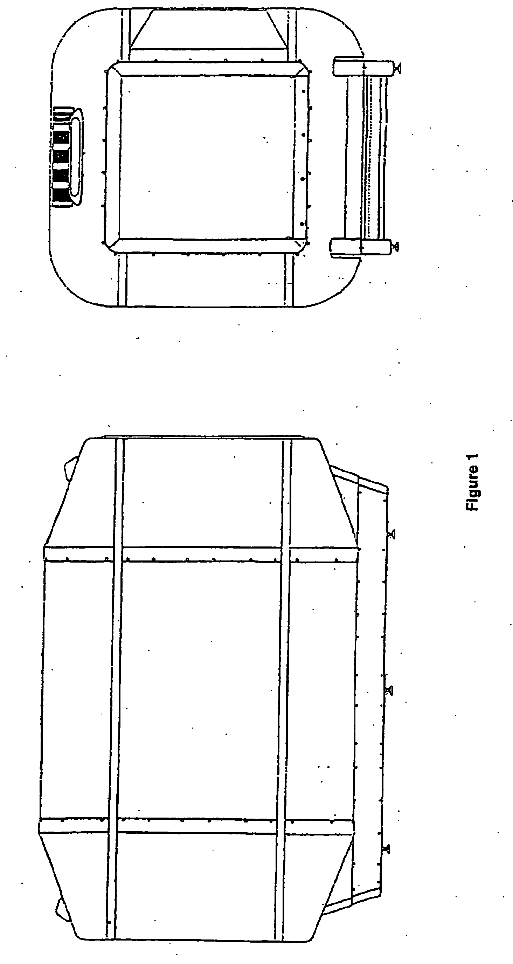

Figure 1 shows a TRP for a prior art transponder system as disclosed by US 5,258,766.

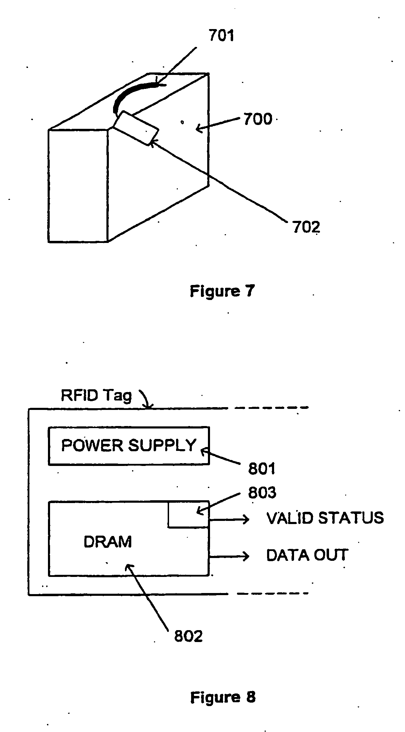

Referring now to Figure 7, there is illustrated a piece of luggage 700 which includes a handle 701 that supports a radio frequency identification ("RFID") transponder 702. In this case, transponder 702 is a passive transponder intended to be powered by an interrogation signal as discussed below. However, it will be appreciated that the transponder could be active (battery powered) or a hybrid active/passive transponder. It will also be understood that the use of RFID transponders on luggage is only one example of a wide range of uses to which the technology can be applied.

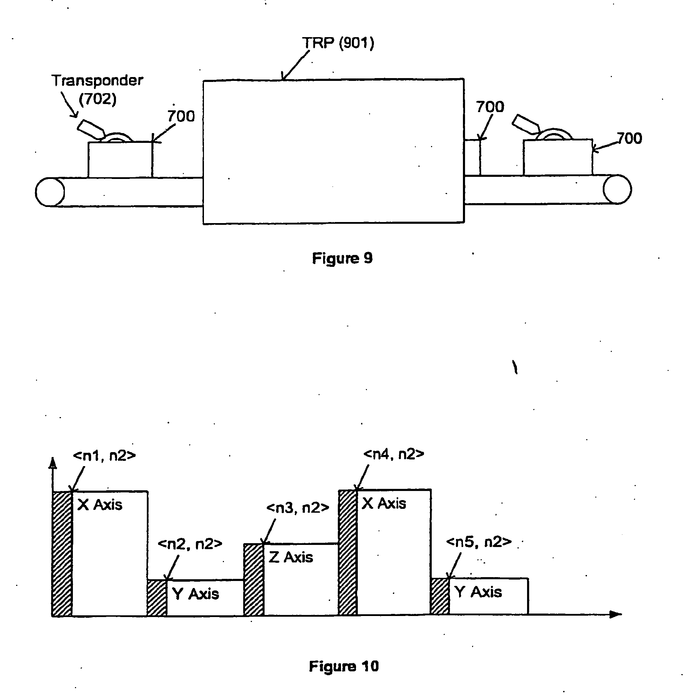

Figure 9 shows a diagram of a conveyor mounted TRP 901 with a series of closely spaced luggage items 700 on the conveyor such as would be encountered on a baggage handling system in an airport, a train station or other transport interchange. Each item has one or more RFID transponder 702 attached. Each transponder includes a unique character string that is transmits, upon interrogation, to allow identification of the specific transponder.

To allow automated sorting and to facilitate other physical handling processes involving the items it is necessary to carefully and accurately determine the order of the items on the conveyor. This, in turn is greatly facilitated if an accurate determination of the order in which the transponders enter a TRP can be made.

It has been known to infer the item order on the conveyor from the order in which the respective transponders are identified by an interrogator. However, with the increasing volumes of items to be handled and the short time in which to affect that handling, there is constant pressure to increase conveyor speeds and to reduce the spacing between the items. Moreover, the number of possible combinations of arrivals and departures from major terminals is escalating which in turn introduces more complexity and more need for increased processing of the items. The result of which is to use multiple transponders. However, with prior art devices this only exponentially increases the risk that the identification messages from these transponders will clash and the transponders will fail to be identified as they enter the TRP. This failing of the prior art only compounds the problem, because when messages clash a further time interval is required to correctly identify the transponders. During this further interval the transponders are moved further into the TRP by the conveyor. This then gives rise to the risk of subsequent transponders entering the TRP before the first transponders are identified. It then becomes possible that one or more of the subsequent transponders will be identified before the first transponder. Consequently, with rising conveyor speeds and decreasing distances between items, the order of the items cannot be reliably inferred from the order of transponder identification.

As discussed earlier, in the TRP of the present preferred embodiment, the interrogation field is sequentially and periodically switched between orthogonal orientations to ensure that all transponders are powered regardless of their relative orientations. In one preferred embodiment of the present invention, when the interrogation field is first transmitted in an orthogonal orientation, a unique number is transmitted by the TRP as part of the interrogating signal. This number is representative of the time of the transmission and the particular orthogonal orientation. This number, defined as a time stamp number, is received by all transponders that are being powered by the interrogation field. Those tags that are being powered for the first time store the time stamp number in a memory. Those tags that already have a time stamp number stored in memory from an earlier interrogation ignore the new time stamp number.

It will be appreciated that the direction of the interrogating field is switched about every 10 ms although in other embodiments different periods are used. Moreover, while the preferred embodiment generates a new time stamp at each switching, it is known in other embodiments to use the same time stamp for respective direction for a plurality of cycles, and in some cases up to ten cycles. This, however, is dependent upon the speed of the conveyor, the density of the items on the conveyor and the length of the TRP.

Returning to the preferred embodiment, each transponder has an on-board memory array for storing first data and a signal processor for extracting the time stamp from the interrogating signal. The contents of the memory array-the first data-is compared with the extracted time stamp and, under certain conditions, the time stamp is stored in the memory array. More preferably, if the time stamp is stored, it overwrites some or all of the first data to constitute fresh first data.

That is, the transponders are configured to access the respective time stamps and to selectively store the information in their memory arrays. The decision as to whether the first data is over written is dependent upon whether or not that transponder has previously been interrogated by the interrogator. If not, then the first data is overwritten. Conversely, if so, then no overwrite occurs. In effect, the first data is representative of the earliest instant the transponder entered the TRP and was powered-that is, interrogated-for the first time by that interrogator.

The time stamp number is then included as part of each transponders reply or response message. When the transponders provide this message it is received by the interrogator to allow the transponders, and the corresponding items, to be identified and the order of entrance into the TRP to be determined from the time stamp number. The determination of transponder order is now independent of the rate of identification. The operation of the preferred embodiment allows a transponder to traverse the full length of the TRP before it need be identified and the presence of many transponders inside the TRP is not problematic, as all are identified without loss of transponder order.

Advantageously, the preferred embodiment allows the velocity with which transponders move through the TRP to be much higher than the prior art systems where transponders must be identified before the next transponder enters the TRP.

The apparatus and method of the preferred embodiment is not limited to TRP operation but rather is applicable to any single or multiple axis transponder reader. That is, all these devices are suitable for periodically transmitting a unique time stamp number so that transponders newly entered into the interrogation field receives and stores the time stamp. Subsequently the time stamp is included in the transponder's reply message and the reader is able to infer the earliest instant that the transponder entered the interrogation field.

It will be appreciated that the response or reply signal that is provided by the transponder includes information in addition to any data that is derived from the identifier. This information is usually a unique code or string that allows the transponder itself to be identified. That is, the response signal, once decoded by the interrogator, obtains not only data indicative of the particular transponder, but also feedback as to the timing or order in which that transponder was first interrogated.

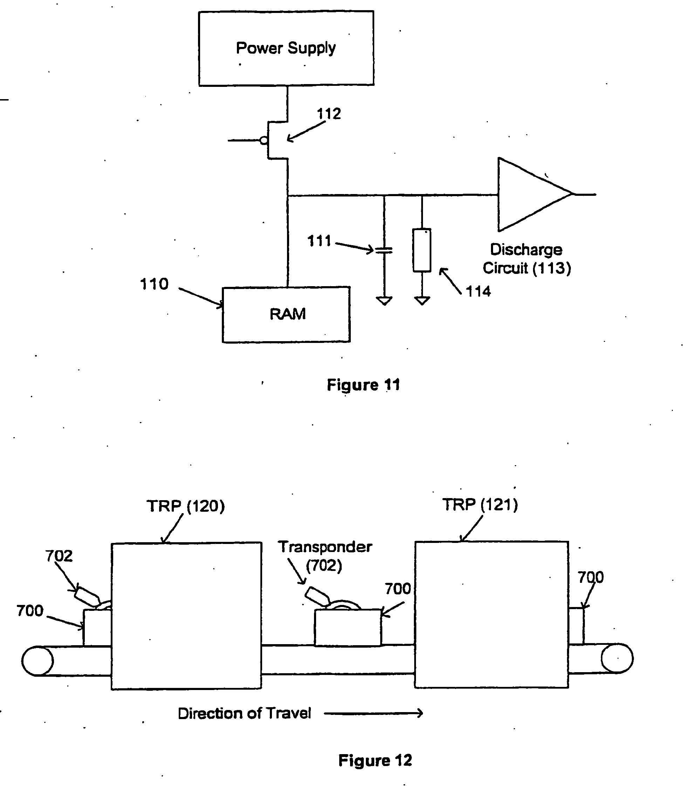

Preferably, the interrogating signal includes an identifier that includes, in addition to the time stamp referred to above, a unique character string or other unique code for allowing identification of the interrogator. This becomes particularly significant in systems where use is made of a plurality of interrogators. For example, in Figure 12 there is illustrated a system where two TRP's-TRP 120 and TRP 121are closely spaced on a conveyor. The items and the corresponding transponders exit TRP 120 and enter the next TRP 121 in quick succession. Using conventional systems with high conveyor speeds it is increasingly common for the time interval between exit and entrance to be too short for the transponder circuits to detect that the TRP has changed. Under these conditions there is an increasing risk that the transponder will ignore the time stamp number transmitted by the second TRP. However, the application of the invention to this system overcomes those limitations of the prior art as the transponder will respond to the interrogation signal from the second interrogator as it will provide an identifier that is different to that of the first interrogator. More particularly, when the interrogation field is first actuated in a fresh orthogonal direction a unique number representative of theTRP is transmitted by the TRP. This number, called the TRP identification number (TRP ID), is received by all transponders that are being powered by the interrogation field. Those tags that are being powered for the first time store the TRP ID in memory. Those tags that already have a TRP ID stored in memory from an earlier interrogation compare this stored TRP ID against the transmitted TRP ID to determine whether the transponder has entered a new TRP. If the TRPID's are different the transponder stores the new number to memory and proceeds to operate as though they were being powered for the first time. In this manner the close spacing of TRP does not impair transponder operation.

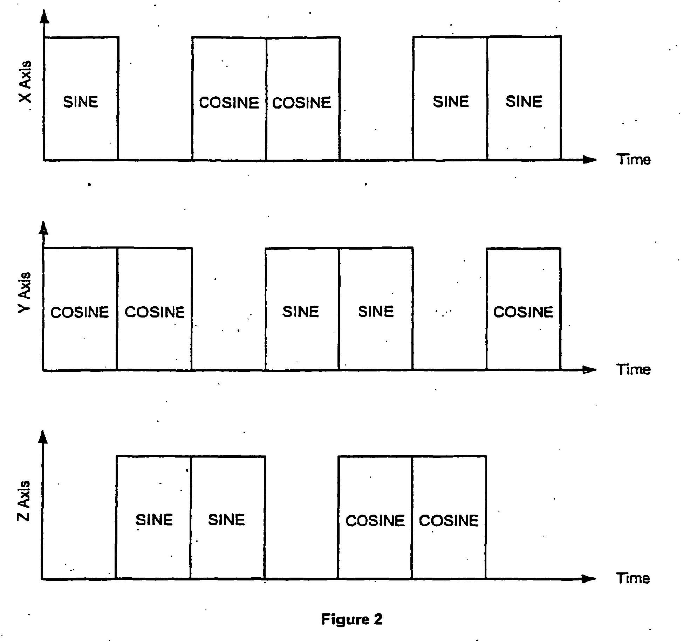

Figure 2 shows the interrogation waveforms associated with the prior art TRP shown in Figure 1. The TRP uses three orthogonal axes along the X, Y and Z directions. It excites these with sine or cosine currents as described in US 5,258,766.

In contrast, Figure 10 shows the interrogation waveform received by a transponder according to a preferred embodiment of the invention where the time stamp number and TRP ID < number1, number2 > are transmitted at the beginning of each orthogonal field. A transponder oriented along one of the orthogonal axes will periodically experience a power outage when the excitation is removed from that axis. Passive transponders power down within a relatively short time, at which point data stored in volatile memory on board the transponder will be lost if the power down time is sufficiently long. Such data can include the time stamp number, TRP identification number, configuration information or temporary data stored in registers.

If the configuration information or temporary settings required for transponder operation are lost then they must be regenerated in the transponder after each switching of the interrogation field. This data can be read out of the transponder's memory or may have to be transmitted to the transponder by the TRP. This is undesirable because of the time delay involved. Moreover, information such as the time stamp will be no longer available.

To prevent the loss of the transponder's time stamp number, TRPID, configuration information or other temporary data, the data must be stored in either conventional non-volatile memory, such a Electrically Erasable Programmable Random Access Memory EEPROM, or in a memory array that is able to hold its information for a period longer than the longest periodic power outage. This memory array will be referred to as"temporary memory". While suitable for use with some embodiments of the invention, EEPROM has the disadvantage that writing data into memory takes several milliseconds. A Random Access Memory RAM or a Dynamic Random Access Memory DRAM like memory does not suffer from slow write times and consumes little power. It will be appreciated that RAM will hold its data provided the supply voltage is maintained and DRAM will hold its data for a short time after the supply voltage has been removed.

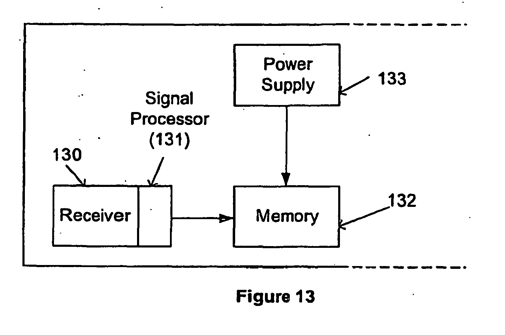

Figure 13 shows a simplified block diagram of specific portions of the RFID transponder's circuits pertinent to the invention. It will be understood by those skilled in the art that RFID tags include a number of functional blocks other than those illustrated. However, these have been omitted from the present description for the purposes of clarity, on the basis that those skilled in the field will be aware of the blocks required, and how to implement them in an RFID tag. The receiver 130 receives the interrogator's interrogating signal which, in this embodiment, includes an identifier in the form of the time stamp number and the TRP ID. In other embodiments only one or the other of the time stamp and TRP ID are sent. Moreover, in still further embodiment additional information is included instead of or in addition to the above information.

The transponder includes a signal processor 131 that is responsive to the receiver 130 for extracting the identifier which is supplied in whole or in part to the on-board memory 132 for storage. The decision as to what information to store, if any, is usually based upon a comparison of the identifier with the existing contents of the memory. For example, in some instances it will simply be a decision of whether the identifier is different from the stored information, as this will be the case upon the first interrogation of the transponder as it is usual for the memory 132 to contain all zeros or all ones at the time of power up. However, if EEPROM type memory is used then the comparison will be more rigorous, as a power down condition will not corrupt the data in the memory. Accordingly, the decision, in some embodiments, is based upon whether the stored date stamp has, in effect, timed out. In other embodiments, however, the decision is based upon a comparison of the received and the stored TRP ID. That is, if the TRP ID is different then the transponder overwrites the stored data with the freshly received data in recognition that the transponder is now being interrogated by another TRP. In further embodiments alternative decision making processes are involved. However, the end result of this is that the memory 132 will contain at least one identifier or at least a sufficient portion of that identifier to allow the transponder to communicate timing details to a TRP when interrogated.

The transponder also includes an on-board power supply 133 for providing electrical power to the transponder. It will be appreciated that the power supply also supplies power to the memory 132.

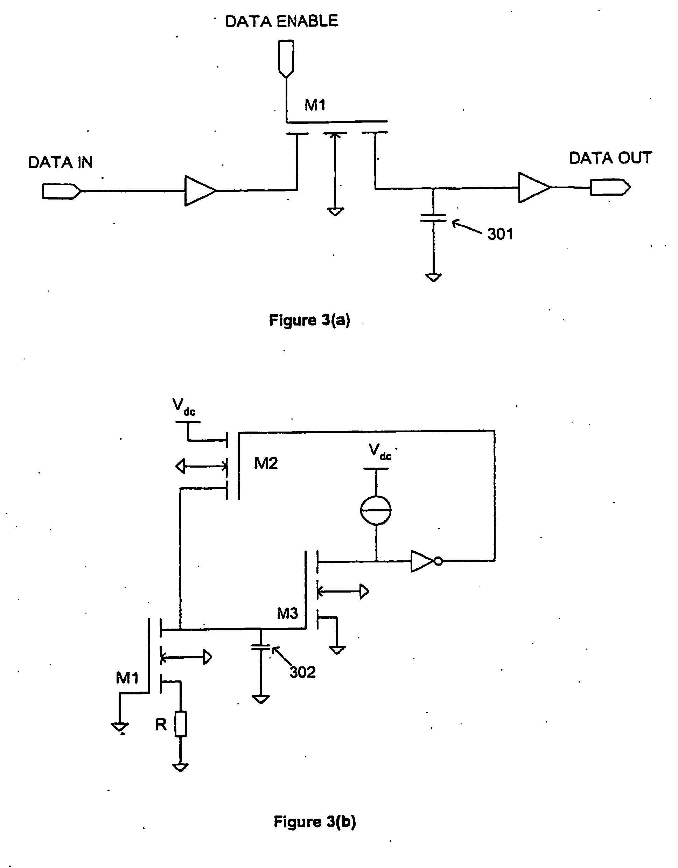

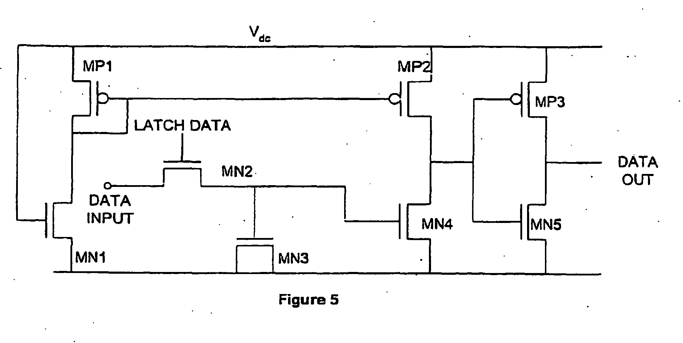

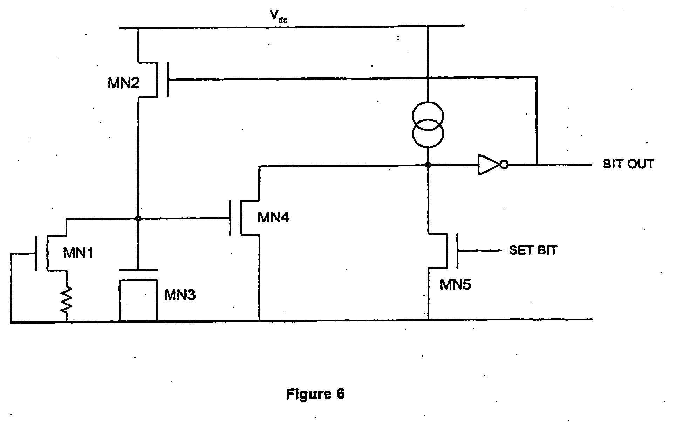

Turning to Figure 8, there is shown a simplified block diagram of specific portions of an embodiment of the invention that makes use of temporary memory. In particular, an RFID tag 800 is illustrated and includes a substrate for supporting all the electronic components, some of which are shown and others of which are omitted for the sake of clarity. The components of interest are a power supply 801 and a temporary memory array in the form of dynamic random access memory (DRAM) 802. The DRAM 802 includes a plurality of address cells (described in detail in relation to Figures 3 (a) and 5) for holding temporary data used by the RFID transponder and its interrogator. In the preferred embodiment, the DRAM also includes timing means in the form of a modified memory cell 803 and associated circuitry (discussed in detail in relation to Figures 3 (b) and 6). Alternative embodiments of the circuit shown in Figure 8 will be discussed later.

Figure 3 (a) shows a schematic of a preferred circuit used for storing one bit of temporary data. It will be appreciated that the memory on-board the transponder is comprised or many like circuits to provide the storage capacity required for the application concerned. Referring back to Figure 3 (a), the memory circuit is a temporary memory circuit where data is input at Data In, input data is stored on the storage capacitor by Data Enable and the stored data is available at Data Out. Data is stored on a storage capacitor 301, and once so stored, there is no discharge path other than leakage currents through MI and the output inverter's gate capacitances. These leakage currents are relatively small and the storage capacitor voltage will maintain itself for at least a few seconds. The normal refresh circuits used for maintaining the data once stored are not shown but are well known and understood to those in the relevant field.

The data that is stored in the temporary memory will typically be derived from one of two sources. Firstly it can be derived from the TRP which transmits the data to the transponder. Secondly it can be derived internally ; either from the transponder's own memory or generated from circuits on the transponder.

Figure 3 (b) shows a schematic of a preferred the circuit used for storing the Valid DRAM Bit. The chip voltage Vdc is maintained on a storage capacitor 302 by the refresh circuit formed by M2, M3, a current source and an inverter. When the voltage Vdc decreases due to a power outage the refresh circuit prevents the storage capacitor from discharging through M2. Discharge occurs through the current sink formed by MI and R. This circuit, when MI is correctly sized, provides a reliable and stable discharge current. The details of this circuit's operation are provided in the publication" Switched Source-Impedance CMOS Circuit For Low Standby Subthreshold Current Giga-ScaleLSI's"pages 1131-1135 of the IEEE JOURNAL OF SOLID STATE CIRCUITS. VOL 28 NO 11, NOVEMBER 1993. The discharge current will always be larger than the leakage currents in the circuit of Figure 3 (a). Accordingly, the circuit shown in 3 (b) will always discharge before the temporary memory circuit and may therefore be used to indicate the validity of the temporary memory.

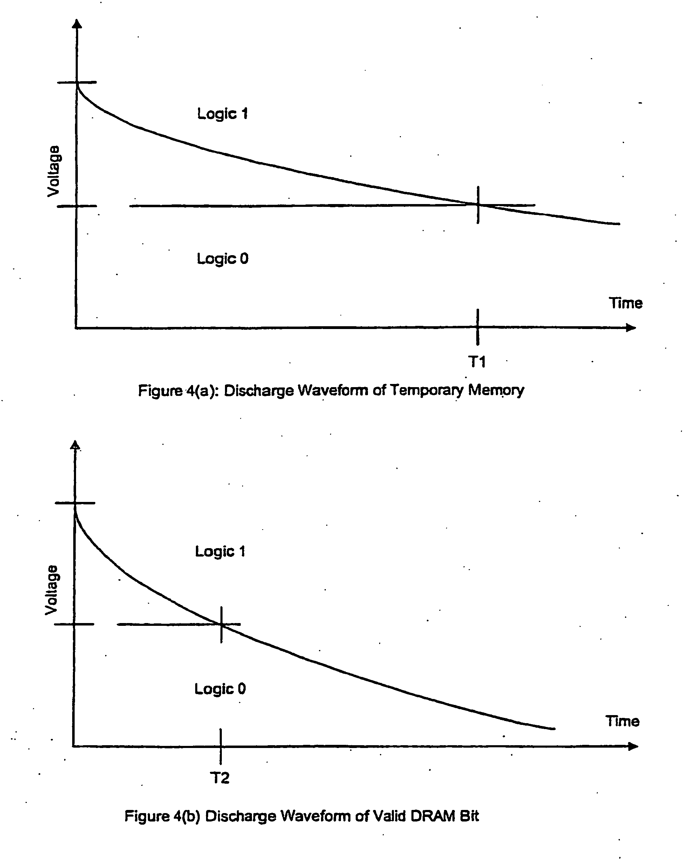

Figure 4 (a) shows a representation of the discharge waveform for the temporary memory circuit. Figure 4 (b) shows a representation of the discharge waveform for the Valid DRAM Bit circuit. It will be noted that the Valid DRAM Bit discharge to the transition point between a logical one and zero is significantly shorter than the temporary memory circuit because of the discharge circuit MI and R.

Figure 5 shows a circuit for temporary memory fabricated on a silicon chip, whilst Figure 6 shows a circuit for a Valid DRAM Bit fabricated on a silicon chip

Figure 11 shows an alternative embodiment of the invention where use is made of temporary memory using RAM, where the electrical power for the memory 110 is stored on a storage capacitor 111. During a power outage the storage capacitor 111 is isolated from the main power supply by the series pass transistor 112. A discharge circuit 113 and voltage level detector 114 connected in parallel with the storage capacitor 111 is used to limit the maximum time that data remains stored in the memory. The discharge current is small enough to ensure that the memory contents remain valid during normal power outages. If the transponder remains without power for too long then the storage capacitor will discharge below the voltage threshold of the level detector. When power is reapplied the chip circuits will detect that the storage capacitor has discharged and recognise that the contents of the RAM are invalid.

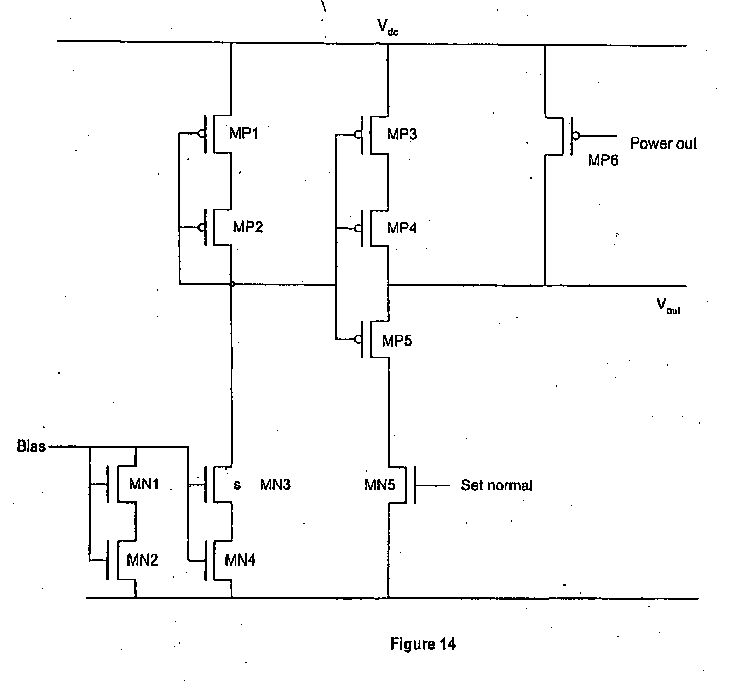

Figure 14 shows a RAM power supply isolation circuit fabricated on a silicon chip for an embodiment of the invention. This provides one specific example of the implementation of such circuitry and is intended to be indicative of the layout. It will be appreciated by those skilled in the art that other configurations and layouts are also suitable.

The methods used by the invention are applicable to a number of other aspects in a transponder system to provide advances over the prior art. Some of these aspects are further described below under that following headings.

### Mute Chip Bit

Where many transponders are simultaneously present inside a TRP the number of transponder identification messages may interfere with the identification process. It is advantageous to be able to silence transponder transmissions once the TRP has identified the transponder and completed all necessary dialogue with the transponder. The TRP may transmit a command, which mutes the transponder preventing further transmissions by the transponder. In the prior art systems the sequential and periodic switching of the interrogation field by the TRP results in transponders periodically powering down. Unfortunately, when they power down they lose this mute information. This necessitates that the muting information be repetitively transmitted for each new orthogonal direction. This reduces the time available for the TRP to receive transponder-identifying messages.

In yet another preferred embodiment of the invention the muting information is stored in the temporary memory, in the form of a"Mute Chip Bit". It is particularly advantageous to store this bit in temporary memory because the bit is not lost as the interrogation field is sequentially and periodically switched between the orthogonal directions. When a transponder powers up it can inspect the Mute Chip Bit and determine whether it should be mute.

### Configuration Settings

There are a number of transponder functional settings that provide enhanced system performance if they are chosen correctly. These settings can be advantageously stored in transponder temporary memory where they will be unaffected by the periodic power outages caused by the sequential switching of the interrogation field. Some examples of these are provided below to show the utility of using temporary memory.

PRBS Number: Transponders may use a random number for controlling some functions. For example transponders may uses a random time delay between reply transmissions where a random number controls the length of the delay. Alternatively transponders may randomly select a frequency for transmitting a reply where a random number controls the frequency selected. An example of such a system is US Patent No. 5,302,954. Random numbers are conveniently generated on chips by Pseudo Random Binary Sequence PRBS generators. These are made using long shift registers with feedback at critical points. For correct operation the binary number in the shift register must not be lost during the power outages caused by the sequential switching of the interrogation field. This is achieved if the shift register contents are stored in temporary memory, using a preferred embodiment of the present invention.

Chopper Settings : For applications where there are a large number of transponders present, the number of transponder identification messages may choke the communication system. Under these circumstances the proportion of transponders transmitting must be reduced. One method of achieving this is to introduce a random time delay between reply transmissions where a random number controls the length of the delay and the average length of the delay is set by the TRP. In this manner only a small portion of transponders are transmitting at any one time. The larger the average delay the smaller the proportion of transponders transmitting. The TRP can set the average delay length by writing to control bits. These bits represent the"Chopper Setting". It is advantageous if the Chopper Setting is not lost during the periodic power outages caused by the sequential switching of the interrogation field. This is achieved if the Chopper Setting is stored in temporary memory, using a preferred embodiment of the present invention.

Power Mode Control: For applications where there are a large number of transponders present and in close proximity, coupling between proximate operating transponders may impair transponder operation. Under these circumstances the proportion of transponders operating must be reduced so that the average distance between operating transponders is increased. The coupling between operating transponders is accordingly reduced. One method of achieving this is to introduce a random time delay between transponders moving from a low power non-operating state and a normal power operating state where a random number controls the length of the time and the average length of the time is set by the TRP. In this manner only a small portion of transponders are operating at any one time. The larger the average time the smaller the proportion of operating transponders. The TRP can set the average time by writing to control bits. These bits represent the"Power Mode Control"number. It is advantageous if the Power Mode Control is not lost during the periodic power outages caused by the sequential switching of the interrogation field. This is achieved if the Power Mode Control is stored in temporary memory, again, using a preferred embodiment of the invention.

The above description illustrates that the preferred embodiments of the invention provide many advantages over the prior art systems. In some embodiments these advantages arise from the provision of a plurality of RFID transponders for use with an RFID interrogator that provides a plurality of temporally spaced interrogating signals that include respective identifiers, where the transponders each include:
a receiver for receiving one or more of the interrogating signals;
a signal processor being responsive to the receiver for extracting the identifiers from the one or more signals; and
a transmitter being responsive to the identifiers for transmitting a response signal for allowing the interrogator to determine the order in which the transponders were first in receipt of an interrogating signal.

It is inherent in the transponder/TRP system that both the transponder and the TRP have transmitters and receivers for allowing two way communication between the devices. However, the preferred embodiments of this invention go further and utilise the content and timing of the transmitted information between the devices in an advantageous and constructive manner. The preferred embodiments also make use of the on-board processing capability of the transponders, which includes, amongst other components, the signal processor mentioned above, a central processor and associated memory.

Although the invention has been described with reference to a number of specific embodiments and aspects, it will be appreciated that by those skilled in the art that the invention can be embodied in many other forms.

## Claims

1. A radio-frequency identification ("RFID") transponder (702) for use in an RFID system, the transponder comprising:
a temporary memory array (802) for storing data; **characterised by**:
a first power supply (801) for powering the temporary memory array; and
timer means comprising a capacitive cell (111; 302) for storing a charge generated by current from the first power supply, the timer means being configured such that, once power from the first power supply ceases to be supplied, the charge in the capacitive cell discharges before the temporary memory array discharges to indicate the validity of data in the temporary memory array.

2. The transponder as claimed in claim 1, wherein the timer means further comprises a refresh circuit configured to maintain a voltage supplied by the power supply on the capacitive cell.

3. The transponder as claimed in claim 2, wherein the refresh circuit comprises a current source.

4. The transponder as claimed in any preceding claim, wherein the timer means further comprises a current sink arranged to receive a discharge current from the capacitive cell.

5. The transponder as claimed in any preceding claim, wherein the temporary memory array is volatile memory.

6. The transponder according to claim 5, wherein the capacitive cell is a memory cell.

7. The transponder according to claim 6, wherein the temporary memory array (802) comprises DRAM and the memory cell forms part of the temporary memory array.

8. The transponder as claimed in any preceding claim, wherein the timer means is arranged to provide a validity flag in response to an interrogating signal, the flag being "valid" if the interrogating signal is received within a second time period and "invalid" if the interrogating signal is received after the second time period, the transponder being configured such that the data in the temporary memory array (802) is maintained in a readable state until at least the expiration of the second time period.

9. The transponder according to claim 8, wherein the status of the validity flag is based on a voltage generated at a predetermined point in the timer means, the voltage decaying as the capacitive cell discharges.

10. The transponder according to claim 9, wherein the voltage is the output voltage of the capacitive cell as it discharges through a load.

11. The transponder according to claim 1, wherein the transponder is configured such that, when power ceases to be provided to the temporary memory array by the first power supply, the data in the temporary memory array is validly maintained therein for a predetermined time period.

12. The transponder according to claim 11, wherein the temporary memory array (802) comprises DRAM, and the predetermined time period is determined by discharging of the temporary memory array (802) through stray leakage paths within the temporary memory array.

13. The transponder as claimed in claim 1, wherein the first power supply (801) is adapted to power circuitry associated with the RFID transponder.

14. The transponder as claimed in claim 1, wherein the temporary memory array (802) comprises one or more memory cells.

15. The transponder as claimed in claim 1, wherein the temporary memory array (802) is responsive to an interrogating signal from the system for selectively updating the first data.

16. A transponder as claimed in claim 1, wherein the temporary memory array comprises any one of:
DRAM;
Memory adapted to hold data for a period of time longer than the longest periodic power outage; and
Memory adapted to hold data for a short time after the supply voltage has been removed.

17. A transponder as claimed in claim 1, wherein the data comprises any one or a combination of:
Date stamp;
Time stamp number representative of the particular time of transmission;
A number representative of the particular orthogonal orientation;
Identifier signal;
Interrogator reference number;
Pseudo random number or character string;
Mute bit;
Identification number;
Configuration information or settings;
Temporary data stored in registers;
PRBS number;
Chopper settings;
A coded string to enable discrimination between other transponders;
Power mode control;
Identity data adapted to determine the order in which the transponder receives an interrogating signal;
The time of the provision of the interrogating signal.

18. A transponder as claimed in claim 1, wherein the temporary memory array (802) is further selectively updated with reference to a time stamp.

19. A transponder according to claim 1, wherein the RFID system provides an interrogating signal having an identifier and the transponder includes a receiver for receiving the signal.

20. A transponder according to claim 19, including a signal processor that is responsive to:
a) the receiver for extracting the identifier from the signal; and
b) the identifier and the first data for determining whether the identifier is stored in the temporary memory array (802).

21. A transponder according to claim 20, wherein the identifier comprises a time stamp and a unique code for identifying a transponder interrogator (901).

22. A transponder according to claim 1 wherein the first power supply (801) is configured to provide power by converting an externally applied electromagnetic excitation field into electrical power.

23. A transponder as claimed in claim 1, wherein the temporary memory circuit stores at least one bit of data.

24. A transponder as claimed in claim 1, wherein the temporary memory circuit comprises a data-storage capacitor interoperably connected to a leakage node.

25. A transponder as claimed in claim 1, wherein the temporary memory circuit is configured to discharge via leakage paths in the event of power failure.

26. A transponder as claimed in claim 25, wherein the memory is configured to discharge only via leakage paths in the event of power failure.

27. A transponder as claimed in claim 1, wherein the data is derived from an interrogator.

28. A transponder as claimed in claim 1, wherein the data is derived from the transponder's own memory.

29. A transponder as claimed in claim 1, wherein the data is derived from other circuits on the transponder.

30. A transponder according to claim 1, wherein the memory comprises a plurality of address cells adapted to hold temporary data used by the transponder.

31. A transponder according to claim 1, wherein the RFID transponder is attached to an article being progressed through a device selected from the group consisting of a transponder reader and an RFID interrogator.

32. A transponder according to claim 1, wherein when power from the power supply ceases to be supplied, the memory is isolated from the power supply by a series pass transistor.

33. A transponder according to claim 1, wherein a discharge circuit and a voltage level detector are connected in parallel with the memory.

34. A transponder according to claim 33, wherein the discharge circuit and the voltage level detector are adapted to limit a maximum time the data remains stored in the temporary memory array (802).

35. A transponder according to claim 34, wherein the discharge current is adapted to ensure that the data in the temporary memory array (802) is validly maintained during power outages.

36. A transponder according to claim 1, wherein the RFID transponder comprises a transmitter for transmitting a reply signal to a transponder interrogator (901) in response to the interrogating signal.

37. An RFID system including a transponder (702) according to claim 1 and a transponder interrogator (901) for providing an interrogation field and reading data from the transponder.

38. An RFID system according to claim 37 wherein the interrogator is configured to sequentially switch an orientation of the interrogation field, and the second time period is selected to exceed the time that the interrogation field is off during switching of its orientation.

39. A RFID system according to claim 38, wherein the interrogator periodically switches orientation of the interrogation field.

40. A RFID system according to claim 39, wherein the interrogation field is switched between orthogonal orientations.

41. A RFID system according to claim 40, wherein a direction of the interrogation field is switched at 10ms time intervals.

42. A RFID system according to claim 40, wherein a direction of the interrogation field is switched at time intervals greater than 10ms.

43. A method of storing data in a radio-frequency identification ("RFID") transponder (702) adapted for use in an RFID system, the method comprising the steps of:
storing data in a temporary memory array (802) included within the transponder; **characterised by**:
providing a first power supply (801) for powering the temporary memory array;
storing, in a capacitive cell of a timer, a charge generated by current from the first power supply (801); and
discharging the charge in the capacitive cell before the temporary memory array discharges to indicate the validity of data in the temporary memory array, when power from the first power supply (801) ceases to be supplied.

44. The method according to claim 43, further comprising:
maintaining a voltage supplied by the power supply on the capacitive cell using a refresh circuit.

45. The method according to claim 44, wherein the refresh circuit comprises a current source.

46. The method according to any one of claims 43 to 45, wherein the step of discharging the capacitive cell comprises receiving a discharge current from the capacitive cell through a current sink.

47. The method as claimed in claim 43, wherein the temporary memory array (802) is volatile memory.

48. The method according to claim 47, wherein the capacitive cell is a memory cell.

49. A method according to claim 48, wherein the temporary memory array (802) comprises DRAM and the memory cell forms part of the temporary memory array.

50. The method according to claim 43, further comprising the steps of:
providing, via the timer, a validity flag in response to an interrogating signal;
wherein the flag is considered valid if the interrogating signal is received within a second time period;
wherein the flag is considered invalid if the interrogating signal is received after the second time period; and
wherein the data in the temporary memory is maintained in a readable state until at least the expiration of the second time period.

51. The method as claimed in any one of claims 43 to 50, further comprising:
validly maintaining the data in the temporary memory array for a predetermined time period after power ceases to be provided to the temporary memory array by the first power supply.

52. The method as claimed in claim 51, wherein the predetermined time period is determined by discharging of the temporary memory array through stray leakage paths within the temporary memory array.

53. A method according to claim 52, wherein the temporary memory array comprises a memory circuit comprising at least one data-storage capacitor for storing at least part of the data.

54. A method according to claim 53, wherein the at least part of the data is stored on the at least one data storage capacitor via a data-enable terminal.

55. A method according to claim 53, wherein the stored data is available at an output of the memory circuit interoperably coupled to the data-storage capacitor.

56. A method according to claim 53, wherein the stray leakage paths comprise at least one of a leakage path through a transistor interoperably connected to the at least one data-storage capacitor and a leakage path through an output of the memory circuit.

57. A method according to claim 51, wherein the memory comprises a memory circuit comprising at least one data-storage capacitor and wherein the at least one data-storage capacitor receives no power from any other part of the RFID transponder (702) when power ceases to be provided to the temporary memory array.

58. A method according to claim 51, wherein the memory comprises a memory circuit comprising at least one data-storage capacitor and wherein the at least one data-storage capacitor does not function as a supplemental power source when power ceases to be provided to the temporary memory array.

59. A method according to claim 51, wherein the memory comprises a memory circuit comprising at least one data-storage capacitor and wherein the at least one data-storage capacitor is interoperably connected to a leakage node.

60. A method according to claim 59, wherein the leakage node is present between the at least one data-storage capacitor and a transistor.

61. A method according to claim 60, wherein the leakage node is present between the at least one data-storage capacitor and an inverter.

62. The method as claimed in claim 43, wherein the first power supply (801) is adapted to power circuitry associated with the RFID transponder (702).

63. The method as claimed in claim 43, wherein the temporary memory array (802) comprises one or more memory cells.

64. A method as claimed in claim 43, further comprising the step of:
being responsive to an interrogating signal from the system for selectively updating the data.

65. A method as claimed in claim 43, further comprising the step of:
enabling the temporary memory array (802) to hold data for a period of time longer than the longest periodic power outage.

66. A method as claimed in claim 43, further comprising the step of:
enabling the temporary memory array to hold data for a short time after the supply voltage has been removed.

67. A method as claimed in claim 43, wherein the data comprises any one or a combination of:
Date stamp;
Time stamp number representative of the particular time of transmission;
A number representative of the particular orthogonal orientation;
Identifier signal;
Interrogator reference number;
Pseudo random number or character string;
Mute bit;
Identification number;
Configuration information or settings;
Temporary data stored in registers;
PRBS number;
Chopper settings;
A coded string to enable discrimination between other transponders;
Power mode control;
Identity data adapted to determine the order in which the transponder (702) receives an interrogating signal;
The time of the provision of the interrogating signal.

68. A method according to claim 43 including the additional step of the RFID system providing an interrogating signal having an identifier, wherein the transponder (702) includes a receiver for receiving the signal.

69. A method according to claim 68 wherein the transponder (702) includes a signal processor that is responsive to:
a) The receiver for extracting the identifier from the signal; and
b) The identifier and the first data for determining whether the identifier is stored in the memory array.

## Patentansprüche

1. Radiofrequenz-Identifikations-("RFID")-Transponder (702) zur Verwendung in einem RFID-System, wobei der Transponder umfasst:
- eine temporäre Speichermatrix (802) zum Speichern von Daten, **gekennzeichnet durch**:
- eine erste Energieversorgung (801) zum Versorgen der temporären Speichermatrix mit Energie, und
- Zeitgebermittel, umfassend eine kapazitive Zelle (111; 302) zum Speichern einer Ladung, die **durch** Strom der ersten Energieversorgung erzeugt ist, wobei die Zeitgebermittel derart konfiguriert sind, dass, sobald Energie aufhört, von der ersten Energieversorgung zugeführt zu werden, sich die Ladung in der kapazitiven Zelle entlädt, bevor sich die temporäre Speichermatrix entlädt, um die Gültigkeit der Daten in der temporären Speichermatrix anzuzeigen.

2. Transponder nach Anspruch 1, wobei die Zeitgebermittel ferner eine Auffrisch-Schaltung umfassen, welche konfiguriert ist, eine von der Energieversorgung an die kapazitive Zelle angelegte Spannung aufrecht zu erhalten.

3. Transponder nach Anspruch 2, wobei die Auffrisch-Schaltung eine Stromquelle umfasst.

4. Transponder nach einem der vorhergehenden Ansprüche, wobei die Zeitgebermittel ferner eine Stromsenke umfassen, welche eingerichtet ist, um einen Entladungsstrom von der kapazitiven Zelle zu empfangen.

5. Transponder nach einem der vorhergehenden Ansprüche, wobei die temporäre Speichermatrix ein flüchtiger Speicher ist.

6. Transponder nach Anspruch 5, wobei die kapazitive Zelle eine Speicherzelle ist.

7. Transponder nach Anspruch 6, wobei die temporäre Speichermatrix (802) ein DRAM umfasst und die Speicherzelle einen Teil der temporäre Speichermatrix bildet.

8. Transponder nach einem der vorhergehenden Ansprüche, wobei die Zeitgebermittel eingerichtet sind, in Reaktion auf ein Abfragesignal ein Gültigkeits-Flag bereitzustellen, wobei das Flag "gültig" ist, wenn das Abfragesignal innerhalb einer zweiten Zeitspanne empfangen wird, und "ungültig", wenn das Abfragesignal nach der zweiten Zeitspanne empfangen wird, wobei der Transponder derart konfiguriert ist, dass die Daten in der temporären Speichermatrix (802) in einem lesbaren Zustand bis wenigstens zum Ablauf der zweiten Zeitspanne aufrecht erhalten werden.

9. Transponder nach Anspruch 8, wobei der Zustand des Gültigkeits-Flags auf einer an einem vorbestimmten Punkt in den Zeitgebermitteln erzeugten Spannung basiert, wobei die Spannung abfällt, wenn sich die kapazitive Zelle entlädt.

10. Transponder nach Anspruch 9, wobei die Spannung die Ausgangsspannung der kapazitiven Zelle ist, wenn sich diese über eine Last entlädt.

11. Transponder nach Anspruch 1, wobei der Transponder derart konfiguriert ist, dass, wenn Energie aufhört, der temporären Speichermatrix durch die erste Energieversorgung zugeführt zu werden, die Daten in der temporären Speichermatrix gültig darin für eine vorbestimmte Zeitspanne aufrecht erhalten werden.

12. Transponder nach Anspruch 11, wobei die temporäre Speichermatrix (802) ein DRAM umfasst, und wobei die vorbestimmte Zeitspanne durch Entladen der temporären Speichermatrix (802) durch Streuverlust-Kriechstrecken innerhalb der temporären Speichermatrix bestimmt ist.

13. Transponder nach Anspruch 1, wobei die erste Energieversorgung (801) eingerichtet ist, eine dem RFID-Transponder zugeordnete Schaltung mit Energie zu versorgen.

14. Transponder nach Anspruch 1, wobei die temporäre Speichermatrix (802) eine oder mehrere Speicherzellen umfasst.

15. Transponder nach Anspruch 1, wobei die temporäre Speichermatrix (802) reagierend auf ein Abfragesignal von dem System zum selektiven Aktualisieren der ersten Daten ist.

16. Transponder nach Anspruch 1, wobei die temporäre Speichermatrix irgendeinen bzw. irgendetwas umfasst von:
- DRAM,
- Speicher, der geeignet ist, Daten für eine Zeitspanne zu halten, welche länger als der längste periodische Stromausfall ist, und
- Speicher, der geeignet ist, Daten für eine kurze Zeit zu halten, nachdem die Versorgungsspannung entfernt wurde.

17. Transponder nach Anspruch 1, wobei die Daten irgendeinen bzw. irgendetwas oder eine Kombination umfassen von:
- Datumsstempel,
- Zeitstempelnummer, die die spezifische Übertragungszeit bezeichnet,
- eine Nummer, die die spezifische orthogonale Orientierung bezeichnet,
- Identifizierungssignal,
- Abfrager-Referenznummer,
- Pseudo-Zufalls-Nummer oder -Zeichenkette,
- stummes Bit,
- Identifikationsnummer,
- Konfigurations-Informationen oder -Einstellungen,
- in Registern gespeicherte temporäre Daten,
- PRBS-Nummer,
- Zerhacker-Einstellungen,
- einen kodierten String, um eine Unterscheidung zwischen anderen Transpondern zu ermöglichen,
- Energiemodus-Regelung/Steuerung,
- Identitätsdaten, die eingerichtet sind, die Reihenfolge, in welcher der Transponder ein Abfragesignal empfängt, zu bestimmen,
- die Zeit der Bereitstellung des Abfragesignals.

18. Transponder nach Anspruch 1, wobei die temporäre Speichermatrix (802) ferner selektiv in Bezug auf einen Zeitstempel aktualisiert wird.

19. Transponder nach Anspruch 1, wobei das RFID-System ein Abfragesignal bereitstellt, welches einen Identifikator aufweist, und wobei der Transponder einen Empfänger zum Empfangen des Signals umfasst.

20. Transponder nach Anspruch 19, umfassend einen Signalprozessor, welcher reagierend ist auf:
a) den Empfänger zum Extrahieren des Identifikators aus dem Signal,
und
b) den Identifikator und die ersten Daten zum Bestimmen, ob der Identifikator in der temporären Speichermatrix (802) gespeichert ist.

21. Transponder nach Anspruch 20, wobei der Identifikator einen Zeitstempel und einen einzigartigen Code zum Identifizieren eines Transponder-Abfragers (901) umfasst.

22. Transponder nach Anspruch 1, wobei die erste Energieversorgung (801) konfiguriert ist, Energie durch Konvertieren eines äußerlich zugeführten elektromagnetischen Erregerfeldes in elektrische Energie bereitzustellen.

23. Transponder nach Anspruch 1, wobei die temporäre Speicherschaltung wenigstens ein Datenbit speichert.

24. Transponder nach Anspruch 1, wobei die temporäre Speicherschaltung einen Datenspeicher-Kondensator umfasst, welcher interoperabel mit einem Leckage-Knoten verbunden ist.

25. Transponder nach Anspruch 1, wobei die temporäre Speicherschaltung konfiguriert ist, sich über Kriechstrecken im Falle eines Stromausfalls zu entladen.

26. Transponder nach Anspruch 25, wobei der Speicher konfiguriert ist, sich nur über Kriechstrecken im Falle eines Stromausfalls zu entladen.

27. Transponder nach Anspruch 1, wobei die Daten von einem Abfrager hergeleitet sind.

28. Transponder nach Anspruch 1, wobei die Daten von dem eigenen Speicher des Transponders hergeleitet sind.

29. Transponder nach Anspruch 1, wobei die Daten von anderen Schaltungen des Transponders hergeleitet sind.

30. Transponder nach Anspruch 1, wobei der Speicher eine Mehrzahl von Adresszellen umfasst, welche geeignet sind, die von dem Transponder verwendeten temporären Daten zu halten.

31. Transponder nach Anspruch 1, wobei der RFID-Transponder an einem Artikel angebracht ist, der durch eine Vorrichtung vorgerückt wird, welche aus der Gruppe ausgewählt ist, die aus einem Transponder-Leser und einem RFID-Abfrager gebildet ist.

32. Transponder nach Anspruch 1, wobei, wenn Energie von der Energieversorgung aufhört, zugeführt zu werden, der Speicher von der Energieversorgung durch einen Längstransistor isoliert wird.

33. Transponder nach Anspruch 1, wobei eine Entladungsschaltung und ein Spannungspegel-Detektor parallel zu dem Speicher geschaltet sind.

34. Transponder nach Anspruch 33, wobei die Entladungsschaltung und der Spannungspegel-Detektor eingerichtet sind, eine Maximalzeit, in welcher die Daten in der temporären Speichermatrix (802) gespeichert bleiben, zu begrenzen.

35. Transponder nach Anspruch 34, wobei der Entladungsstrom eingerichtet ist, zu ermöglichen, dass die Daten in der temporären Speichermatrix (802) während eines Stromausfalls gültig aufrecht erhalten werden.

36. Transponder nach Anspruch 1, wobei der RFID-Transponder einen Sender zum Senden eines Antwortsignals zu einem Transponder-Abfrager (901) in Reaktion auf das Abfragesignal umfasst.

37. RFID-System, umfassend einen Transponder (702) nach Anspruch 1 und einen Transponder-Abfrager (901) zum Bereitstellen eines Abfragefeldes und zum Lesen von Daten von dem Transponder.

38. RFID-System nach Anspruch 37, wobei der Abfrager konfiguriert ist, sequentiell eine Orientierung des Abfragefeldes umzuschalten, und wobei die zweite Zeitspanne ausgewählt ist, um die Zeit zu überschreiten, die das Abfragefeld während des Umschaltens seiner Orientierung aus ist.

39. RFID-System nach Anspruch 38, wobei der Abfrager periodisch eine Orientierung des Abfragefeldes umschaltet.

40. RFID-System nach Anspruch 39, wobei das Abfragefeld zwischen orthogonalen Orientierungen umgeschaltet wird.

41. RFID-System nach Anspruch 40, wobei eine Richtung des Abfragefeldes mit Zeitintervallen von 10 ms umgeschaltet wird.

42. RFID-System nach Anspruch 40, wobei eine Richtung des Abfragefeldes mit Zeitintervallen größer als 10 ms umgeschaltet wird.

43. Verfahren zum Speichern von Daten in einem Radiofrequenz-Identifikations-("RFID")-Transponder (702), welcher zur Verwendung in einem RFID-System eingerichtet ist, wobei das Verfahren die folgenden Schritte umfasst:
- Speichern von Daten in einer temporären Speichermatrix (802), die innerhalb des Transponders umfasst ist,
**gekennzeichnet durch**:
- Bereitstellen einer ersten Energieversorgung (801) zum Versorgen der temporären Speichermatrix mit Energie,
- Speichern einer **durch** Strom von der ersten Energieversorgung (801) erzeugten Ladung in einer kapazitiven Zelle eines Zeitgebers und
- Entladen der Ladung in der kapazitiven Zelle, bevor sich die temporäre Speichermatrix entlädt, um die Gültigkeit von Daten in der temporären Speichermatrix anzuzeigen, wenn Energie von der ersten Energieversorgung (801) aufhört, zugeführt zu werden.

44. Verfahren nach Anspruch 43, ferner umfassend:
- Aufrechterhalten einer von der Energieversorgung an die kapazitive Zelle angelegten Spannung unter Verwendung einer Auffrisch-Schaltung.

45. Verfahren nach Anspruch 44, wobei die Auffrisch-Schaltung eine Stromquelle umfasst.

46. Verfahren nach einem der Ansprüche 43 bis 45, wobei der Schritt eines Entladens der kapazitiven Zelle ein Empfangen eines Entladungsstroms von der kapazitiven Zelle durch eine Stromsenke umfasst.

47. Verfahren nach Anspruch 43, wobei die temporäre Speichermatrix (802) ein flüchtiger Speicher ist.

48. Verfahren nach Anspruch 47, wobei die kapazitive Zelle eine Speicherzelle ist.

49. Verfahren nach Anspruch 48, wobei die temporäre Speichermatrix (802) ein DRAM umfasst, und wobei die Speicherzelle einen Teil der temporären Speichermatrix bildet.

50. Verfahren nach Anspruch 43, ferner umfassend die folgenden Schritte:
- Bereitstellen, über einen Zeitgeber, eines Gültigkeits-Flags in Reaktion auf ein Abfragesignal,
wobei das Flag als gültig betrachtet wird, wenn das Abfragesignal innerhalb einer zweiten Zeitspanne empfangen wird,
wobei das Flag als ungültig betrachtet wird, wenn das Abfragesignal nach der zweiten Zeitspanne empfangen wird, und
wobei die Daten in dem temporären Speicher in einem lesbaren Zustand bis wenigstens zum Ablauf der zweiten Zeitspanne aufrecht erhalten werden.

51. Verfahren nach einem der Ansprüche 43 bis 50, ferner umfassend:
- gültig Aufrechterhalten der Daten in der temporären Speichermatrix für eine vorbestimmte Zeitspanne, nachdem Energie aufhört, der temporären Speichermatrix durch die erste Energieversorgung zugeführt zu werden.

52. Verfahren nach Anspruch 51, wobei die vorbestimmte Zeitspanne durch Entladen der temporären Speichermatrix durch Streuverlust-Kriechstrecken innerhalb der temporären Speichermatrix bestimmt wird.

53. Verfahren nach Anspruch 52, wobei die temporäre Speichermatrix eine Speicherschaltung umfasst, die wenigstens einen Datenspeicher-Kondensator zum Speichern von wenigstens einem Teil der Daten umfasst.

54. Verfahren nach Anspruch 53, wobei der wenigstens eine Teil der Daten in dem wenigstens einen Datenspeicher-Kondensator über eine Datenfreigabe-Station speichert wird.

55. Verfahren nach Anspruch 53, wobei die gespeicherten Daten an einem Ausgang der Speicherschaltung verfügbar sind, welcher interoperabel mit dem Datenspeicher-Kondensator gekoppelt ist.

56. Verfahren nach Anspruch 53, wobei die Streuverlust-Kriechstrecken wenigstens eine von einer Kriechstrecke durch einen interoperabel mit dem wenigstens einen Datenspeicher-Kondensator verbundenen Transistor und einer Kriechstrecke durch einen Ausgang der Speicherschaltung umfassen.

57. Verfahren nach Anspruch 51, wobei der Speicher eine Speicherschaltung umfasst, welche wenigstens einen Datenspeicher-Kondensator umfasst, und wobei der wenigstens eine Datenspeicher-Kondensator keine Energie von irgend einem anderen Teil des RFID-Transponders (702) empfängt, wenn Energie aufhört, der temporären Speichermatrix zugeführt zu werden.

58. Verfahren nach Anspruch 51, wobei der Speicher eine Speicherschaltung umfasst, welche wenigstens einen Datenspeicher-Kondensator umfasst, und wobei der wenigstens eine Datenspeicher-Kondensator nicht als ergänzende Energiequelle fungiert, wenn Energie aufhört, der temporären Speichermatrix zugeführt zu werden.

59. Verfahren nach Anspruch 51, wobei der Speicher eine Speicherschaltung umfasst, welche wenigstens einen Datenspeicher-Kondensator umfasst, und wobei der wenigstens eine Datenspeicher-Kondensator interoperabel mit einem Leckage-Knoten verbunden ist.

60. Verfahren nach Anspruch 59, wobei der Leckage-Knoten zwischen dem wenigstens einen Datenspeicher-Kondensator und einem Transistor vorhanden ist.

61. Verfahren nach Anspruch 60, wobei der Leckage-Knoten zwischen dem wenigstens einen Datenspeicher-Kondensator und einem Umrichter vorhanden ist.

62. Verfahren nach Anspruch 43, wobei die erste Energieversorgung (801) eingerichtet ist, eine Schaltung mit Energie zu versorgen, welche dem RFID-Transponder (702) zugeordnet ist.

63. Verfahren nach Anspruch 43, wobei die temporäre Speichermatrix (802) eine oder mehrere Speicherzellen umfasst.

64. Verfahren nach Anspruch 43, ferner umfassend den folgenden Schritt:
- reagierend Sein auf eine Abfragesignal von dem System zum selektiven Aktualisieren der Daten.

65. Verfahren nach Anspruch 43, ferner umfassend den folgenden Schritt:
- der temporären Speichermatrix (802) Ermöglichen, Daten für eine Zeitspanne zu halten, welche länger als der längste periodische Stromausfall ist.

66. Verfahren nach Anspruch 43, ferner umfassend den folgenden Schritt:
- der temporären Speichermatrix Ermöglichen, Daten für eine kurze Zeit zu halten, nachdem die Versorgungsspannung entfernt worden ist.

67. Verfahren nach Anspruch 43, wobei die Daten irgendeinen bzw. irgendetwas oder eine Kombination umfassen von:
- Datumsstempel,
- Zeitstempelnummer, die die spezifische Übertragungszeit bezeichnet,
- eine Nummer, die die spezifische orthogonale Orientierung bezeichnet,
- Identifizierungssignal,
- Abfrager-Referenznummer,
- Pseudo-Zufalls-Nummer oder -Zeichenkette,
- stummes Bit,
- Identifikationsnummer,
- Konfigurations-Informationen oder -Einstellungen,
- in Registern gespeicherte temporäre Daten,
- PRBS-Nummer,
- Zerhacker-Einstellungen,
- einen kodierten String, um eine Unterscheidung zwischen anderen Transpondern zu ermöglichen,
- Energiemodus-Regelung/Steuerung,
- Identitätsdaten, die eingerichtet sind, die Reihenfolge, in welcher der Transponder ein Abfragesignal empfängt, zu bestimmen,
- die Zeit der Bereitstellung des Abfragesignals.

68. Verfahren nach Anspruch 43, umfassend den zusätzlichen Schritt, dass das RFID-System ein Abfragesignal bereitstellt, welches einen Identifikator aufweist, wobei der Transponder (702) einen Empfänger zum Empfangen des Signals umfasst.

69. Verfahren nach Anspruch 68, wobei der Transponder (702) einen Signalprozessor umfasst, welcher reagierend ist auf:
a) den Empfänger zum Extrahieren des Identifikators aus dem Signal, und
b) den Identifikator und die ersten Daten zum Bestimmen, ob der Identifikator in der Speichermatrix gespeichert ist.

## Revendications

1. Transpondeur (702) d'identification par radiofréquence ("RFID") à utiliser dans un système RFID, le transpondeur comprenant :
un réseau de mémoires temporaires (802) pour stocker des données ; **caractérisé par** :
une première alimentation électrique (801) pour l'alimentation du réseau de mémoires temporaires ; et
un moyen de minuterie comprenant une cellule capacitive (111 ; 302) pour stocker une charge générée par un courant provenant de la première alimentation électrique, le moyen de minuterie étant configuré de sorte que, dès lors qu'on arrête l'alimentation électrique provenant de la première alimentation électrique, la charge dans la cellule capacitive se décharge avant la décharge du réseau de mémoires temporaires pour indiquer la validité des données dans le réseau de mémoires temporaires.

2. Transpondeur tel que revendiqué dans la revendication 1, dans lequel le moyen de minuterie comprend en outre un circuit de rafraîchissement configuré pour maintenir une tension alimentée par l'alimentation électrique sur la cellule capacitive.

3. Transpondeur tel que revendiqué dans la revendication 2, dans lequel le circuit de rafraîchissement comprend une source de courant.

4. Transpondeur tel que revendiqué dans l'une des revendications précédentes, dans lequel le moyen de minuterie comprend en outre un collecteur de courant agencé pour recevoir un courant de décharge de la cellule capacitive.

5. Transpondeur tel que revendiqué dans l'une des revendications précédentes, dans lequel le réseau de mémoires temporaires est une mémoire volatile.

6. Transpondeur selon la revendication 5, dans lequel la cellule capacitive est une cellule de mémoire.

7. Transpondeur selon la revendication 6, dans lequel le réseau de mémoires temporaires (802) comprend une DRAM et la cellule de mémoire forme une partie du réseau de mémoires temporaires.

8. Transpondeur tel que revendiqué dans l'une des revendications précédentes, dans lequel le moyen de minuterie est agencé pour fournir un drapeau de validité en réponse à un signal d'interrogation, le drapeau étant "valide" si le signal d'interrogation est reçu dans un deuxième délai et "invalide" si le signal d'interrogation est reçu après le deuxième délai, le transpondeur étant configuré de sorte que les données dans le réseau de mémoires temporaires (802) soient conservées dans un état lisible au moins jusqu'à l'expiration du deuxième délai.

9. Transpondeur selon la revendication 8, dans lequel l'état du drapeau de validité est basé sur une tension générée à un point prédéterminé du moyen de minuterie, la tension se dégradant à mesure que la cellule capacitive se décharge.

10. Transpondeur selon la revendication 9, dans lequel la tension est la tension de sortie de la cellule capacitive à mesure qu'elle se décharge à travers une charge.

11. Transpondeur selon la revendication 1, dans lequel le transpondeur est configuré de sorte que, lorsqu'on arrête l'alimentation électrique fournie par la première alimentation électrique au réseau de mémoires temporaires, les données dans le réseau de mémoires temporaires y sont conservées valides pendant un délai prédéterminé.

12. Transpondeur selon la revendication 11, dans lequel le réseau de mémoires temporaires (802) comprend une DRAM, et le délai prédéterminé est déterminé par une décharge du réseau de mémoires temporaires (802) à travers des chemins de fuite parasite dans le réseau de mémoires temporaires.

13. Transpondeur tel que revendiqué dans la revendication 1, dans lequel la première alimentation électrique (801) est adaptée pour alimenter un ensemble de circuits associé au transpondeur RFID.

14. Transpondeur tel que revendiqué dans la revendication 1, dans lequel le réseau de mémoires temporaires (802) comprend une ou plusieurs cellules de mémoire.

15. Transpondeur tel que revendiqué dans la revendication 1, dans lequel le réseau de mémoires temporaires (802) est sensible à un signal d'interrogation provenant du système pour mettre à jour de manière sélective les premières données.

16. Transpondeur tel que revendiqué dans la revendication 1, dans lequel le réseau de mémoires temporaires comporte l'une quelconque :
d'une DRAM ;
d'une mémoire adaptée pour conserver les données pendant un délai plus long que la coupure périodique de courant la plus longue ; et
d'une mémoire adaptée pour conserver des données pendant une courte période après retrait de la tension d'alimentation.

17. Transpondeur tel que revendiqué dans la revendication 1, dans lequel les données comprennent l'une quelconque ou une combinaison :
d'un timbre à date ;
d'un nombre d'estampilles temporelles représentant le moment particulier de transmission;
d'un nombre représentant l'orientation orthogonale particulière ;
d'un signal d'identification ;
d'un nombre de référence d'interrogateur ;
d'un nombre pseudo-aléatoire ou d'une chaîne de caractères ;
d'un bit muet ;
d'un nombre d'identification ;
d'informations ou de paramètres de configuration ;
de données temporaires stockées dans des registres ;
d'un nombre PRBS ;
de paramètres de hachage ;
d'une chaîne codée pour permettre la différenciation avec d'autres transpondeurs ;
d'une commande du mode d'alimentation ;
des données d'identité adaptées pour déterminer l'ordre dans lequel le transpondeur reçoit un signal d'interrogation ;
d'un délai de fourniture du signal d'interrogation.

18. Transpondeur tel que revendiqué dans la revendication 1, dans lequel le réseau de mémoires temporaires (802) est également mis à jour de manière sélective en se référant à un timbre à date.

19. Transpondeur selon la revendication 1, dans lequel le système RFID offre un signal d'interrogation ayant un identifiant et le transpondeur comporte un récepteur pour la réception du signal.

20. Transpondeur selon la revendication 19, comportant un processeur de signal qui est sensible :
a) au récepteur pour extraire l'identifiant du signal ; et
b) à l'identifiant et aux premières données pour déterminer si l'identifiant est stocké dans le réseau de mémoires temporaires (802).

21. Transpondeur selon la revendication 20, dans lequel l'identifiant comprend une estampille temporelle et un code unique pour identifier un interrogateur-transpondeur (901).

22. Transpondeur selon la revendication 1, dans lequel la première alimentation électrique (801) est configurée pour fournir une alimentation électrique par la conversion d'un champ d'excitation électromagnétique appliqué de l'extérieur en puissance électrique.

23. Transpondeur tel que revendiqué dans la revendication 1, dans lequel le circuit de mémoire temporaire stocke au moins un bit de données.

24. Transpondeur tel que revendiqué dans la revendication 1, dans lequel le circuit de mémoire temporaire comprend un condensateur de stockage de données connecté en interopérabilité à un noeud de fuite.

25. Transpondeur tel que revendiqué dans la revendication 1, dans lequel le circuit de mémoire temporaire est configuré pour une décharge par des chemins de fuite en cas de panne de courant.

26. Transpondeur tel que revendiqué dans la revendication 25, dans lequel la mémoire est configurée pour se décharger, uniquement par des chemins de fuite dans le cas d'une coupure de courant.

27. Transpondeur tel que revendiqué dans la revendication 1, dans lequel les données sont dérivées d'un interrogateur.

28. Transpondeur tel que revendiqué dans la revendication 1, dans lequel les données sont dérivées de la mémoire propre au transpondeur.

29. Transpondeur tel que revendiqué dans la revendication 1, dans lequel les données sont dérivées d'autres circuits sur le transpondeur.

30. Transpondeur selon la revendication 1, dans lequel la mémoire comprend une pluralité de cellules d'adresse adaptées pour conserver des données temporaires utilisées par le transpondeur.

31. Transpondeur selon la revendication 1, dans lequel le transpondeur RFID est fixé à un article progressant grâce à un dispositif sélectionné dans le groupe composé d'un lecteur de transpondeur et d'un interrogateur RFID.

32. Transpondeur selon la revendication 1, dans lequel, lorsqu'on arrête l'alimentation de l'alimentation électrique, la mémoire est isolée de l'alimentation électrique par un transistor à passage longitudinal.

33. Transpondeur selon la revendication 1, dans lequel un circuit de décharge et un détecteur de niveau de tension sont connectés en parallèle avec la mémoire.

34. Transpondeur selon la revendication 33, dans lequel le circuit de décharge et le détecteur de niveau de tension sont adaptés pour limiter un délai maximal pendant lequel les données restent stockées dans le réseau de mémoires temporaires (802).

35. Transpondeur selon la revendication 34, dans lequel le courant de décharge est adapté pour s'assurer que les données dans le réseau de mémoires temporaires (802) sont conservées valides pendant les coupures électriques.

36. Transpondeur selon la revendication 1, dans lequel le transpondeur RFID comprend un émetteur pour transmettre un signal de réponse à un interrogateur-transpondeur (901) en réponse au signal d'interrogation.

37. Système RFID comportant un transpondeur (702) selon la revendication 1 et un interrogateur-transpondeur (901) pour fournir un champ d'interrogation et pour lire des données à partir du transpondeur.

38. Système RFID selon la revendication 37 dans lequel l'interrogateur est configuré pour commuter successivement une orientation du champ d'interrogation, et le deuxième délai est choisi pour dépasser le délai pendant lequel le champ d'interrogation est à l'arrêt durant la commutation de son orientation.

39. Système RFID selon la revendication 38, dans lequel l'interrogateur commute périodiquement l'orientation du champ d'interrogation.

40. Système RFID selon la revendication 39, dans lequel le champ d'interrogation est commuté entre des orientations orthogonales.

41. Système RFID selon la revendication 40, dans lequel une direction du champ d'interrogatoire est commutée à intervalles temporels de 10 ms.

42. Système RFID selon la revendication 40, dans lequel une direction du champ d'interrogation est commutée à intervalles temporels supérieurs à 10 ms.

43. Procédé de stockage de données dans un transpondeur (702) d'identification par radiofréquence ("RFID") adapté pour être utilisé dans un système RFID, le procédé comprenant les étapes qui consistent :
à stocker des données dans un réseau de mémoires temporaire (802) compris dans le transpondeur, **caractérisé par** le fait :
de fournir une première alimentation électrique (801) pour alimenter le réseau de mémoires temporaires ;
de stocker, dans une cellule capacitive d'une minuterie, une charge générée par le courant provenant de la première alimentation électrique (801) ; et
de décharger la charge dans la cellule capacitive avant la décharge du réseau de mémoires temporaires pour indiquer la validité des données dans le réseau de mémoires temporaires, lorsqu'on arrête l'alimentation provenant de la première alimentation électrique (801).

44. Procédé selon la revendication 43, comprenant en outre le fait :
de maintenir une tension alimentée par l'alimentation électrique sur la cellule capacitive en utilisant un circuit de rafraîchissement.

45. Procédé selon la revendication 44, dans lequel le circuit de rafraîchissement comprend une source de courant.

46. Procédé selon l'une quelconque des revendications 43 à 45, dans lequel l'étape qui consiste à décharger la cellule capacitive comprend le fait de recevoir un courant de décharge de la cellule capacitive à travers un collecteur de courant.

47. Procédé tel que revendiqué dans la revendication 43, dans lequel le réseau de mémoires temporaires (802) est une mémoire volatile.

48. Procédé selon la revendication 47, dans lequel la cellule capacitive est une cellule de mémoire.

49. Procédé selon la revendication 48, dans lequel le réseau de mémoires temporaires (802) comprend une DRAM et la cellule de mémoire forme une partie du réseau de mémoires temporaires.

50. Procédé selon la revendication 43, comprenant en outre les étapes consistant :
à fournir, via la minuterie, un drapeau de validité en réponse à un signal d'interrogation,
où le drapeau est considéré comme valide si le signal d'interrogation est reçu dans un deuxième délai ;
où le drapeau est considéré comme invalide si le signal d'interrogation est reçu après le deuxième délai ; et
où les données dans la mémoire temporaire sont maintenues dans un état lisible au moins jusqu'à l'expiration du deuxième délai.

51. Procédé tel que revendiqué dans l'une quelconque des revendications 43 à 50, comprenant en outre le fait :
de conserver de manière valide les données dans le réseau de mémoires temporaires pendant une période prédéterminée après arrête de l'alimentation par la première source d'alimentation au réseau de mémoires temporaires.

52. Procédé tel que revendiqué dans la revendication 51, dans lequel la période prédéterminée est déterminée par la décharge du réseau de mémoires temporaires par des chemins de fuite parasite au sein du réseau de mémoires temporaires.

53. Procédé selon la revendication 52, dans lequel le réseau de mémoires temporaires comprend un circuit de mémoire comprenant au moins un condensateur de stockage de données pour stocker au moins une partie des données.

54. Procédé selon la revendication 53, dans lequel l'au moins une partie des données est stockée sur l'au moins condensateur de stockage de données via un terminal intégrant des données.

55. Procédé selon la revendication 53, dans lequel les données stockées sont disponibles à une sortie du circuit de mémoire couplée en interopérabilité au condensateur de stockage de données.

56. Procédé selon la revendication 53, dans lequel les chemins de fuite parasite comprennent au moins l'un d'un chemin de fuite à travers un transistor connecté en interopérabilité à l'au moins un condensateur de stockage de données et un chemin de fuite à travers une sortie du circuit de mémoire.

57. Procédé selon la revendication 51, dans lequel la mémoire comprend un circuit de mémoire comprenant au moins un condensateur de stockage de données et dans lequel l'au moins un condensateur de stockage de données ne reçoit aucune alimentation de toute autre partie du transpondeur RFID (702) lorsqu'on arrête l'alimentation au réseau de mémoires temporaires.

58. Procédé selon la revendication 51, dans lequel la mémoire comprend un circuit de mémoire comprenant au moins un condensateur de stockage de données et dans lequel l'au moins un condensateur de stockage de données ne fonctionne pas comme une source de puissance supplémentaire lorsqu'on arrête l'alimentation au réseau de mémoires temporaires.

59. Procédé selon la revendication 51, dans lequel la mémoire comprend un circuit de mémoire comprenant au moins un condensateur de stockage de données et dans lequel l'au moins un condensateur de stockage de données et dans lequel l'au moins un condensateur de stockage de données est connecté en interopérabilité à un noeud de fuite.

60. Procédé selon la revendication 59, dans lequel le noeud de fuite est présent entre l'au moins un condensateur de stockage de données et un transistor.

61. Procédé selon la revendication 60, dans lequel le noeud de fuite est présent entre l'au moins un condensateur de stockage de données et un onduleur.

62. Procédé tel que revendiqué dans la revendication 43, dans lequel la première alimentation électrique (801) est adaptée pour alimenter un ensemble de circuits associé au transpondeur RFID (702).

63. Procédé tel que revendiqué dans la revendication 43, dans lequel le réseau de mémoires temporaires (802) comprend une ou plusieurs cellules de mémoire.

64. Procédé tel que revendiqué dans la revendication 43, comprenant en outre l'étape qui consiste :
à être sensible à un signal d'interrogation provenant du système pour mettre à jour les données de manière sélective.

65. Procédé tel que revendiqué dans la revendication 43, comprenant en outre l'étape qui consiste :
à permettre au réseau de mémoires temporaires (802) de conserver les données pendant une période plus longue que la coupure de courant périodique la plus longue.

66. Procédé tel que revendiqué dans la revendication 43, comprenant en outre l'étape qui consiste :
à permettre au réseau de mémoires temporaires de conserver des données pendant une courte période après retrait de la tension d'alimentation.

67. Procédé tel que revendiqué dans la revendication 43, dans lequel les données comprennent l'un quelconque ou une combinaison :
d'un timbre à date ;
d'un nombre d'estampilles temporelles représentant le délai de transmission particulier ;
d'un nombre représentatif de l'orientation orthogonale particulière ;
d'un signal d'identification ;
d'un nombre de référence d'interrogateur ;
d'un nombre pseudo-aléatoire ou chaîne de caractères ;
d'un bit muet ;
d'un nombre d'identification ;
d'informations ou de paramètres de configuration ;
des données temporaires stockées dans des registres ;
du nombre PRBS ;
des paramètres de hachage ;
d'une chaîne codée pour permettre une discrimination entre d'autres transpondeurs ;
d'une commande du mode d'alimentation ;
des données d'identité adaptées pour déterminer l'ordre dans lequel le transpondeur (702) reçoit un signal d'interrogation ;
du délai de la provision du signal d'interrogation.

68. Procédé selon la revendication 43 comportant l'étape supplémentaire du système RFID fournissant un signal d'interrogation ayant un identifiant, dans lequel le transpondeur (702) comporte un récepteur pour recevoir le signal.

69. Procédé selon la revendication 68 dans lequel le transpondeur (702) comporte un processeur de signal qui est sensible :
a) au récepteur pour extraire l'identifiant du signal ; et
b) à l'identifiant et aux premières données pour déterminer si l'identifiant est stocké dans le réseau de mémoires.
